# EUROPEAN PATENT APPLICATION

(11) **EP 4 560 423 A1**
(43) Date of publication of application: **28.05.2025**
(21) Application number: 23842698.5
(22) Date of filing: 02.06.2023
(51) Int. Cl.: G05D 1/00

(54) **AUTONOMOUS MOVABLE BODY CONTROL SYSTEM, AUTONOMOUS MOVABLE BODY, AND CONTROL DEVICE**

(30) Priority: 21.07.2022 JP 2022116520
(71) Applicant: Panasonic Holdings Corporation, Osaka, 571-8501 (JP)
(72) Inventor: FUJITA, Shunsuke, Osaka 571-0057 (JP); HIROSE, Motoki, Osaka 571-0057 (JP); SHIGEKANE, Akio, Osaka 571-0057 (JP)
(74) Representative: Eisenführ Speiser
(86) International application number: PCT/JP2023/020680
(87) International publication number: WO 2024/018766

(57) **Abstract**

Provided are an autonomous movable body control system, an autonomous movable body, and a control device, each capable of stopping the autonomous movable body safely. The autonomous movable body control system according to the present disclosure includes a plurality of autonomous movable bodies, and a control device that transmits a control signal for controlling at least one of the plurality of autonomous movable bodies as a control target to each of the plurality of autonomous movable bodies. **In** the system, among the plurality of autonomous movable bodies, an autonomous movable body other than the control target determines whether an own movable body of the autonomous movable body is located within a stoppable region, and stops based on the result of the determination.

## Description

### Technical Field

The present disclosure relates to an autonomous movable body control system, an autonomous movable body, and a control device.

### Background Art

A technique is known in the related art, in which an autonomous movable body that autonomously travels is remotely controlled. Patent Literature (hereinafter, referred to as PTL) 1 discloses a vehicle control device that controls an autonomous traveling vehicle, the vehicle control device causing the autonomous traveling vehicle to transition to a tele-waiting mode upon receiving communication from a telepanel, and during the tele-waiting mode, causing the autonomous traveling vehicle to enter a teleoperation mode, the teleoperation mode being a mode in which the autonomous traveling vehicle responds to a speed request and a steering angle request from the telepanel. In the vehicle control device described in PTL 1, when the vehicle transitions to the tele-waiting mode, the vehicle is configured to stop autonomous traveling and to stop, and respond to a command from the telepanel.

### Citation List

### Patent Literature

PTL 1
Japanese Patent Application Laid-Open No. H08-095635

### Summary of Invention

### Technical Problem

In a system for remotely controlling only an autonomous movable body that requires remote controlling among a plurality of autonomous movable bodies that autonomously move, it is necessary to stop an autonomous movable body that is not remotely controlled in order to ensure safety around the autonomous movable body not remotely controlled. There is, however, a problem in that it is not desirable to stop an autonomous movable body in a place where it is difficult to ensure safety.

In view of the above problems, an object of the present disclosure is to provide an autonomous movable body control system, an autonomous movable body, and a control device, each capable of stopping the autonomous movable body safely.

### Solution to Problem

An autonomous movable body control system according to an embodiment of the present disclosure includes: a plurality of autonomous movable bodies; and a control device that transmits a control signal for controlling at least one of the plurality of autonomous movable bodies as a control target to each of the plurality of autonomous movable bodies,
wherein, among the plurality of autonomous movable bodies, an autonomous movable body other than the control target performs determination of whether an own movable body of the autonomous movable body is located within a stoppable region, and stops based on a result of the determination.

An autonomous movable body according to an embodiment of the present disclosure is an autonomous movable body that belongs to a group including a plurality of autonomous movable bodies, the autonomous movable body including: a receiver that receives a control signal; and a controller that, when the controller receives a second control signal different from a first control signal that uses at least one of the plurality of autonomous movable bodies as a control target, performs determination of whether an own movable body of the autonomous movable body is located within a stoppable region, and stops the autonomous movable body based on the determination.

An autonomous movable body according to an embodiment of the present disclosure is an autonomous movable body that belongs to a group including a plurality of autonomous movable bodies, the autonomous movable body comprising: a receiver that receives a control signal; and a controller that, when the controller receives a third control signal that includes target information for identifying an autonomous movable body of the control target among the plurality of the autonomous movable bodies and control information for controlling the autonomous movable body of the control target, determines whether an own movable body of the autonomous movable body belonging to the group is of an autonomous movable body other than the control target, and when it is determined that the own movable body is of the autonomous movable body other than the control target, performs determination of whether the own movable body is located within a stoppable region, and stops the autonomous movable body belonging to the group based on a result of the determination.

A control device according to an embodiment of the present disclosure is a control device that transmits a control signal to each of a plurality of autonomous movable bodies that belong to a group, the control device including: an operation part that receives an operation for controlling at least one of the plurality of autonomous movable bodies as a control target; and a transmitter that, based on the operation, transmits a first control signal for controlling an autonomous movable body of the control target to the autonomous movable body of the control target, and transmits a second control signal to an autonomous movable body other than the control target, the second control signal causing the autonomous movable body other than the control target to perform a determination of whether an own movable body thereof is located within a stoppable region, and stop based on a result of the determination.

A control device according to an embodiment of the present disclosure is a control device that transmits a control signal to each of a plurality of autonomous movable bodies that belong to a group, the control device including: an operation part that receives an operation for controlling at least one of the plurality of autonomous movable bodies as a control target; and a transmitter that, based on the operation, transmits a third control signal to all of the autonomous movable bodies in the group, the third control signal including target information indicating that the at least one of the plurality of autonomous movable bodies is the control target and control information for controlling an autonomous movable body of the control target.

### Advantageous Effects of Invention

According to the present disclosure, it is possible to stop an autonomous movable body safely.

### Brief Description of Drawings

FIG. 1 illustrates an exemplary configuration of an autonomous movable body control system according to the present embodiment;
FIG. 2 is a functional block diagram of a control device;
FIG. 3 illustrates an example of a monitoring screen displayed on a display;
FIG. 4 illustrates an appearance of the autonomous movable body;
FIG. 5 is a functional block diagram of the autonomous movable body;
FIG. 6 is a sequence diagram for describing a first behavior example of the autonomous movable body control system; and
FIG. 7 is a sequence diagram for describing a second behavior example of the autonomous movable body control system.

### Description of Embodiments

Hereinafter, embodiments of the present disclosure will be described with reference to the drawings.

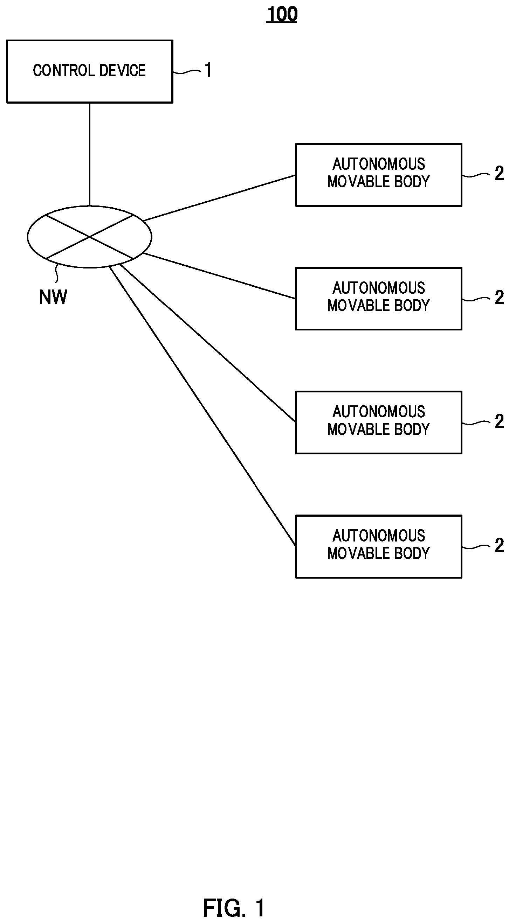

FIG. 1 illustrates an exemplary configuration of autonomous movable body control system 100 according to the present embodiment. As illustrated in FIG. 1, autonomous movable body control system 100 includes control device 1 and a plurality of autonomous movable bodies 2. The plurality of autonomous movable bodies 2 included in autonomous movable body control system 100 constitute one group. Control device 1 is connected with each of autonomous movable bodies 2 belonging to the group in a manner capable of communication by a network NW such as the Internet. It is assumed that radio communication is used for communication between control device 1 and each of autonomous movable bodies 2 through network NW, but wired communication may be used.

In the example illustrated in FIG. 1, autonomous movable body control system 100 includes four autonomous movable bodies 2, but the present disclosure is not limited thereto. The number of autonomous movable bodies 2 included in autonomous movable body control system 100 may be changed to any number according to the purpose.

In autonomous movable body control system 100, each of the plurality of autonomous movable bodies 2 autonomously moves toward a destination set in advance. Control device 1 causes information (such as a camera image) indicating the surroundings of autonomous movable body 2 to be displayed for a surveillant, and the surveillant monitors, via control device 1, whether each autonomous movable body 2 can autonomously move without any problem and whether each autonomous movable body 2 is not in a dangerous situation.

Each of the plurality of autonomous movable bodies 2 can cease autonomous movement as necessary and move in accordance with remote control by control device 1. That is, autonomous movable body 2 is configured to be capable of transitioning between an autonomous movement mode and a remote control mode. Further, control device 1 is a device that is used by a surveillant to monitor a plurality of autonomous movable bodies 2 and also is used by the surveillant to remotely control at least one of the plurality of autonomous movable bodies 2.

Autonomous movable body 2 is, for example, a transport robot that transports an article in a predetermined area such as outdoors, indoors, a specific facility, private land, and the like. In this case, the destination of autonomous movable body 2 is set to, for example, the destination to which an article is to be transported or a place at which the transport robot receives an article. Further, autonomous movable body 2 may be a cleaner, a movable body for various sensing purposes, a communication robot for communicating with a person, an automobile, a train, an aircraft, or the like capable of transporting not only an article but also a person. Further, autonomous movable body 2 may be a monitoring robot that monitors various meters and the like in the factory.

### [Control Device 1]

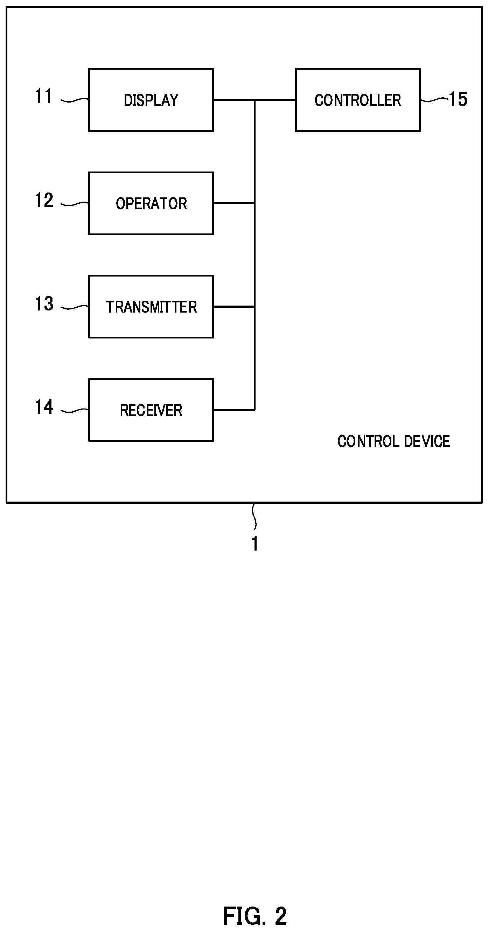

FIG. 2 is a functional block diagram of control device 1. As illustrated in FIG. 2, control device 1 includes display 11, operation part 12, transmitter 13, receiver 14, and controller 15. Receiver 14 is an example of a receiver in the present disclosure.

Display 11 is a display device such as a liquid crystal display (LCD), an organic electro luminescence (EL) display, or the like. Display 11 may be a stationary display such as a display, a portable display such as a liquid crystal display, or a mobile display such as a head mount display (HMD) including virtual reality (VR) goggles. Display 11 displays, for example, camera images that have been transmitted from each of a plurality of autonomous movable bodies 2 controlled by control device 1.

Operation part 12 is an operation device that receives an operation by a surveillant who monitors a plurality of autonomous movable bodies 2 through control device 1. Operation part 12 is composed of, for example, at least one of a mouse, a keyboard, a touchpad, a trackball, a joystick, a game controller, a game pad, various keys and buttons, or a combination thereof. When operation part 12 is composed of a touch pad, the touch pad may be superimposed on an LCD panel of display 11 to form a so-called touch panel.

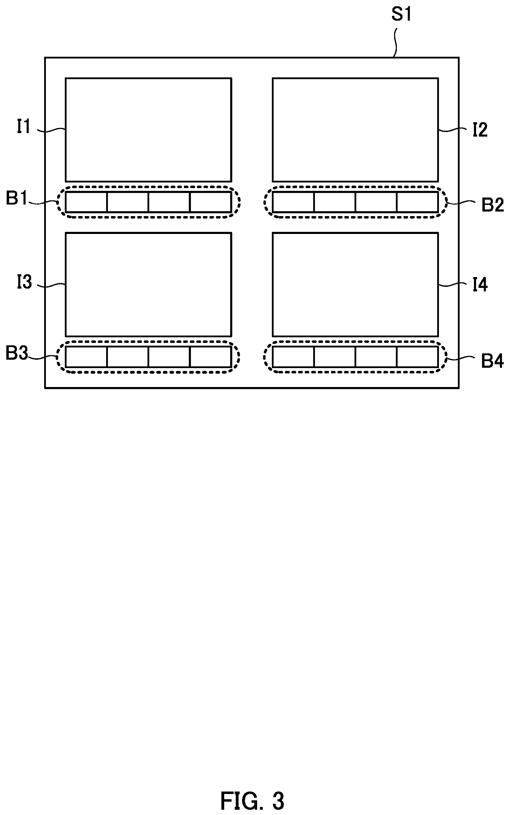

FIG. 3 illustrates an example of the monitoring screen displayed on display 11. FIG. 3 illustrates monitoring screen S1 for monitoring four autonomous movable bodies 2. Monitoring screen S1 includes surrounding images I1 to I4 and operation buttons B1 to B4 displayed on the screen.

Surrounding images I1 to I4 are images transmitted from different autonomous movable bodies 2 and show the surroundings of the respective autonomous movable bodies 2. Surrounding images I1 to I4 are each an image captured by a camera provided, for example, on the front side of autonomous movable body 2. The surrounding images I1 to I4 may be moving images.

In the example illustrated in FIG. 3, four surrounding images I1 to I4 are displayed on one screen of monitoring screen S1, but the number of the surrounding images may be other than four. The number of the surrounding images displayed on monitoring screen S1 may be set to any number according to the number of autonomous movable bodies 2 as monitoring targets, the number of autonomous movable bodies 2 that the surveillant wants to monitor at once, or the like.

Operation buttons B1 to B4 are buttons that accept operations for remotely operating respective autonomous movable bodies 2 when there is a need to remotely operate respective autonomous movable bodies 2. Operation buttons B1 to B4 each are composed of a plurality of buttons. Each of these plurality of buttons is a button for accepting a different operation (for example, for moving in each direction or stopping).

In the example illustrated in FIG. 3, four operation buttons are displayed for each surrounding image, but the number of the operation buttons does not have to be four. The number, the size, the positions, and the like of the operation buttons may be set to any number and the like based on the control contents that the surveillant performs on autonomous movable body 2.

Transmitter 13 transmits the control signal generated by controller 15 to autonomous movable body 2 via network NW. Receiver 14 receives various information including the surrounding image from autonomous movable body 2. In the example illustrated in FIG. 1, transmitter 13 and receiver 14 are each illustrated as a separate configuration, but may form one configuration (for example, a transceiver).

Controller 15 controls the overall behavior of control device 1. Specifically, controller 15 controls display 11 to display the image received from autonomous movable body 2 via receiver 14. Further, controller 15 generates a control signal for controlling autonomous movable body 2 based on the operation of operation part 12 by a surveillant, and causes the control signal to be transmitted to autonomous movable body 2 via transmitter 13. Details of the control signal will be described below.

Each functional block of control device 1 described above can be realized by a computer such as a personal computer (PC) including, for example, a CPU, a storage, and an input and output device.

### [Autonomous Movable Body 2]

Next, autonomous movable body 2 will be described. As described above, autonomous movable body control system 100 of the present disclosure includes a plurality of autonomous movable bodies 2 that belong to a group, and each autonomous movable body 2 has substantially the same structure and functions.

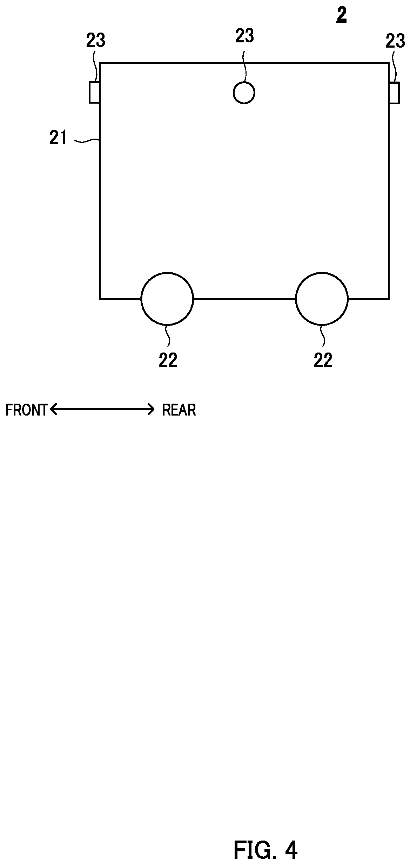

FIG. 4 illustrates an appearance of autonomous movable body 2. FIG. 4 illustrates the appearance of autonomous movable body 2 as viewed from the side surface. As illustrated in FIG. 4, autonomous movable body 2 includes main body 21, wheels 22, and sensor parts 23.

Main body 21 is a main body portion of autonomous movable body 2. Main body 21 is a housing that stores components of autonomous movable body 2, for example. For example, when main body 21 is used for an application such as delivery of an article using autonomous movable body 2, main body 21 may further include a storage portion for storing the article.

Wheels 22 are for moving autonomous movable body 2. Wheel 22 is rotated by driver 25 described below and moves autonomous movable body 2. Wheels 22 may include, for example, a front wheel and a rear wheel, and autonomous movable body 2 may move by rotating only the front wheel or the rear wheel. Further, at least the front wheel or the rear wheel may serve as a steering wheel that determines the movement direction of autonomous movable body 2.

In the example illustrated in FIG. 4, autonomous movable body 2 is assumed to have four wheels 22. The number of wheels 22 is not limited to this, and may be one, two, three, six, or the like. At least one of the plurality of wheels 22 may be, for example, an omni wheel (a wheel capable of moving in multiple directions). Further, autonomous movable body 2 may be configured to have a crawler (endless track) or a plurality of leg portions instead of wheel 22, and to move by the crawler or the plurality of leg portions.

Sensor parts 23 are sensors that acquire information relating to the situation around autonomous movable body 2 (hereinafter, referred to as environmental information). The number and positions of the sensors included in autonomous movable body 2 may be arbitrarily set according to the type and accuracy of the environmental information to be acquired. Sensor part 23 includes, for example, a camera (imaging element) that captures images of the surroundings of autonomous movable body 2, a proximity sensor that detects the presence or absence of an object in close proximity, a distance measurement sensor (for example, LiDAR) that detects the distance to an object in the surroundings and the shape of the object, and the like.

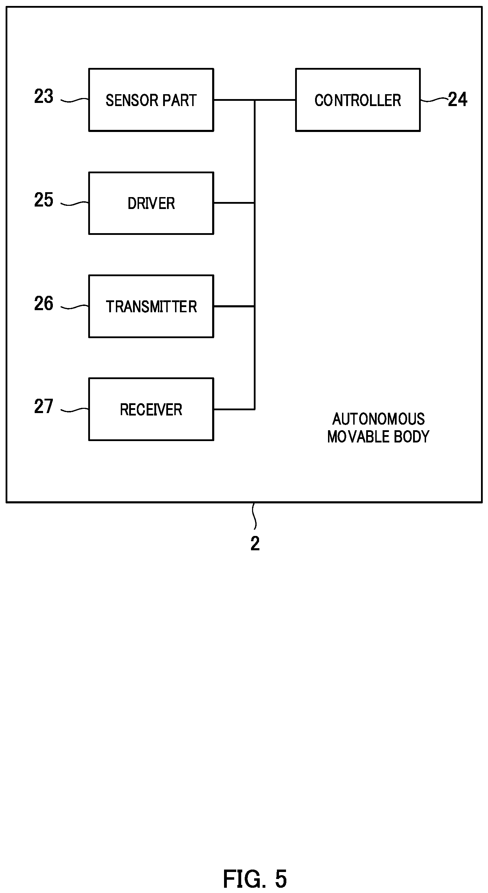

FIG. 5 is a functional block diagram of autonomous movable body 2. As illustrated in FIG. 5, autonomous movable body 2 includes, in addition to sensor parts 23, controller 24, driver 25, transmitter 26, and receiver 27, as functional blocks. Controller 24 is an example of the controller in the present disclosure. Transmitter 26 is an example of a transmitter in the present disclosure.

Controller 24 controls the overall behavior of autonomous movable body 2. Specifically, controller 24 can switch between the autonomous traveling mode and the remote control mode based on the control signal received from control device 1. In the autonomous traveling mode, controller 24 controls driver 25 to autonomously move autonomous movable body 2 to the destination based on information on the situation around autonomous movable body 2 acquired by sensor part 23. Further, in the remote control mode, controller 24 controls driver 25 to move or stop autonomous movable body 2 based on the control signal received from control device 1. Further, controller 24 may generate a request signal including a request to control device 1 and the like based on information regarding the situation around autonomous movable body 2.

In the present embodiment, there are a plurality of types of control signals transmitted from controller 24 to autonomous movable body 2. Details of the control signal will be described below.

Further, when another autonomous movable body 2 other than the own movable body of an autonomous movable body 2 (namely the autonomous movable body 2 itself) in the plurality of autonomous movable bodies 2 included in the group transitions to the remote control mode, controller 24 of the autonomous movable body 2 controls the own movable body to stop at a safe location. The reason for this is that, when there is only one surveillant, the surveillant cannot monitor the other autonomous movable body 2 other than the own movable body while remotely controlling the autonomous movable body 2, and thus it becomes difficult to ensure the safety of autonomous movable body 2 other than the autonomous movable body 2 transitioned to the remote control mode.

Details of the control of autonomous movable body 2 by controller 24 will be described below.

Driver 25 controls the behavior of wheel 22 based on the control of controller 24. Driver 25 is composed of, for example, at least one motor, and rotates at least one of the plurality of wheels 22 as a drive wheel. In the example illustrated in FIG. 4, two of the four wheels 22 are rear wheels serving as drive wheels. In this case, driver 25 may change the traveling direction of autonomous movable body 2 by making the outputs of the left and right rear wheels different from each other. By configuring autonomous movable body 2 such that two of the four wheels are front wheels and are omni wheels, autonomous movable body 2 can move without any problem even when the traveling direction is changed.

Transmitter 26 transmits the environmental information acquired by the sensor part 23 to control device 1 via network NW. Further, transmitter 26 may transmit the request signal generated by controller 24 to control device 1.

Receiver 27 receives various signals such as a control signal from control device 1 via network NW.

In the example illustrated in FIG. 5, transmitter 26 and receiver 27 are each illustrated as a separate configuration, but may be one configuration (for example, a transceiver).

### (Control in Autonomous Movement Mode)

Control of autonomous movable body 2 by controller 24 in the autonomous movement mode will be described. As a premise, autonomous movable body 2 has acquired map information for a movable area in advance, and stores the map information in a storage (not illustrated), or the like. For example, the map information may be generated based on environmental information obtained by sensor parts 23 when a surveillant actually drives autonomous movable body 2 by remote control in an area where autonomous movable body 2 can move before starting the service of the autonomous movable body control system 100.

In the autonomous movement mode, controller 24 determines the traveling route based on the environmental information obtained by sensor parts 23, map information stored in the storage and the like, and destination information indicating a destination designated by control device 1. Subsequently, controller 24 controls driver 25 such that autonomous movable body 2 is moved along the traveling route. Thus, autonomous movable body 2 can perform autonomous movement to the destination. Controller 24 may perform the autonomous movement control further using position information on the position of the own movable body acquired using a global navigation satellite system (GNSS) such as a GPS satellite in addition to the environmental information, the map information, and the destination information.

While autonomous movable body 2 is autonomously moving, controller 24 constantly makes a determination as to whether autonomous movement may continue or not based on environmental information. For example, when it is determined that danger has occurred around autonomous movable body 2, controller 24 stops the autonomous movement of autonomous movable body 2 and generates a request signal for requesting control device 1 to perform remote control. Examples of cases where controller 24 determines that a danger has occurred include cases in which a person, another vehicle (including another autonomous movable body), an obstacle, or the like approaches autonomous movable body 2, or cases in which the autonomous movable body approaches a place where a degree of danger of traveling is relatively high, such as a crosswalk or a railroad crossing.

### (Control in Remote Control Mode)

Control of autonomous movable body 2 by controller 24 in the remote control mode will be described. In the remote control mode, the surveillant performs an operation for controlling the behavior of autonomous movable body 2 based on the environmental information of autonomous movable body 2 displayed on control device 1. Control device 1 generates a first control signal for executing the remote control on autonomous movable body 2, which is the remote control target, based on the operation. The first control signal is one of control signals in the present embodiment.

The first control signal includes, for example, control information specifying the direction in which autonomous movable body 2 moves and the movement speed thereof. Controller 24 controls driver 25 to cause autonomous movable body 2 to move or to stop based on the control information.

### (Control when Another Autonomous Movable Body 2 Transitions to Remote Control Mode)

Control by controller 24 when another autonomous movable body 2 transitions to the remote control mode will be described.

Among the plurality of autonomous movable bodies 2 included in the group, when another autonomous movable body 2 other than the own movable body of an autonomous movable body 2 transitions to the remote control mode, controller 24 of the autonomous movable body 2 determines whether the own movable body is located within a stoppable region at that time. Controller 24 recognizes whether another autonomous movable body 2 other than own movable body has transitioned to the remote control mode based on a second control signal or a third control signal (details will be described below) received from control device 1. The stoppable region is a region in which it is assumed in advance that autonomous movable body 2 can safely stop, and is a region that is not a non-stoppable region. The non-stoppable region is a region in which the occurrence of danger or inconvenience (such as blocking the passage of a human) is expected when autonomous movable body 2 stops.

Examples of the stoppable region include a sidewalk, a park, a passage in a facility, and the like. The stoppable region is more preferably set at the end portion of a sidewalk, a park, or a passage in a facility, in such a manner that the passage of a human is not obstructed. Examples of the non-stoppable region include a crosswalk, a railroad crossing, a roadway, an area near an entrance or an exit of a house or a shop, and the like.

The stoppable region and the non-stoppable region may be set in advance by an administrator, a provider, or the like of autonomous movable body control system 100, and the positions of the regions are indicated in the map information. Controller 24 determines whether the own movable body is located within a stoppable region based on the position information of the own movable body and the position of the stoppable region or the non-stoppable region indicated in the map information.

When controller 24 determines that the own movable body is located within the stoppable region, controller 24 ensures the safety of the own movable body by causing the own movable body to stop on the spot. Further, when controller 24 determines that the own movable body is not within a stoppable region (is located within a non-stoppable region), controller 24 causes the own movable body to continues moving along the traveling route, and stops the own movable body when the own movable body has moved to a stoppable region. Thus, it is possible to ensure the safety of own movable body even when own movable body is not located in a stoppable region when another autonomous movable body 2 transitions to the remote control mode.

### [Overall Behavior Example of Autonomous Movable Body Control System 100]

Hereinafter, an overall behavior example of autonomous movable body control system 100 will be described.

### <First Behavior Example>

In the behavior example described below, operations when one autonomous movable body 2 included in a group transitions to the remote control mode while each of the autonomous movable bodies 2 constituting the group autonomously move in the autonomous movement mode will be described in detail.

In the following description of the behavior example, autonomous movable body control system 100 is assumed to include four autonomous movable bodies 2A, 2B, 2C, and 2D, and that one group is composed of these autonomous movable bodies 2A, 2B, 2C, and 2D.

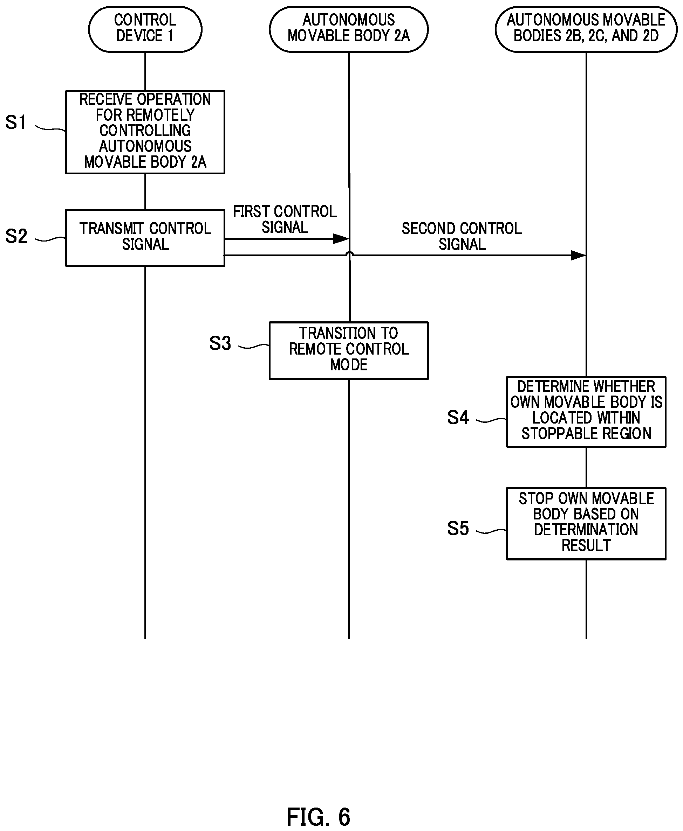

FIG. 6 is a sequence diagram for describing the first behavior example of autonomous movable body control system 100. At the start of the sequence, autonomous movable bodies 2A to 2D are each moving in the autonomous movement mode.

In step S1, control device 1 receives an operation for remotely controlling autonomous movable body 2A by a surveillant. Such an operation is performed by the surveillant, for example, when the surveillant views environmental information from each autonomous movable body 2 and determines that remote control is necessary, or when the surveillant recognizes that control device 1 receives the request signal for requiring the remote control when autonomous movable body 2 falls in a dangerous situation.

In step S2, control device 1 transmits a first control signal to autonomous movable body 2A that is the target of the remote control and transmits a second control signal different from the first control signal to each of the other autonomous movable bodies 2B, 2C, and 2D that are not the targets of the remote control. The second control signal is one of the control signals in the present embodiment.

As described above, the first control signal is a control signal for remotely controlling autonomous movable body 2A. The first control signal includes control information specifying the direction in which autonomous movable body 2A is to be moved and the movement speed thereof.

Further, the second control signal is a control signal for stopping autonomous movable bodies 2B, 2C, and 2D at safe positions. The second control signal includes information indicating to autonomous movable bodies 2B, 2C, and 2D that autonomous movable body 2A (which is an autonomous movable body other than the own movable bodies of autonomous movable bodies 2B, 2C, and 2D) has transitioned to the remote control mode, and instruction information to cause autonomous movable bodies 2B, 2C, and 2D to stop the own movable bodies autonomously.

In step S3, autonomous movable body 2A having received the first control signal transitions to a remote control mode, and thereafter, moves based on a remote operation by a surveillant. For safety, it is desirable that autonomous movable body 2A temporarily stops on the spot during the period from when autonomous movable body 2A receives the first control signal until autonomous movable body 2A transitions from the autonomous movement mode to the remote control mode. Subsequently, when the surveillant performs an operation of ending the remote control with respect to control device 1, autonomous movable body 2A may transition to the autonomous movement mode again.

Meanwhile, autonomous movable bodies 2B, 2C, and 2D, which have received the second control signals in step S4, recognize that the other autonomous movable body 2A has transitioned to the remote control mode, and each determine whether the own movable body (i.e., the autonomous movable body itself) is located within a stoppable region.

Then, autonomous movable bodies 2B, 2C, and 2D stop the own movable bodies in step S5 based on the result of the determination in step S4. More specifically, when the own movable body is determined to be located within the stoppable region in step S4, each of autonomous movable bodies 2B, 2C, and 2D ceases further movement to stop the own movable body thereof. When it is determined in step S4 that the own movable body is not located within a stoppable region, on the other hand, each of autonomous movable bodies 2B, 2C, and 2D continues to move along the movement route, and stop the own movable body upon entering the stoppable region.

In this manner, when one autonomous movable body 2A transitions to the remote control mode, the other autonomous movable bodies 2B, 2C, and 2D in the same group promptly stop. Thus, it is possible to ensure the safety of autonomous movable bodies 2B, 2C, and 2D while remote control of autonomous movable body 2A is performed, that is, while monitoring by a surveillant is away from autonomous movable bodies 2B, 2C, and 2D.

Further, when one autonomous movable body 2A transitions to the remote control mode, and when each of the other autonomous movable bodies 2B, 2C, and 2D is not located within a stoppable region, the other autonomous movable bodies 2B, 2C, and 2D stop after moving to a stoppable region, and thus, it is possible to prevent a situation in which danger is caused by stopping the other autonomous movable bodies 2B, 2C, and 2D on the spot.

### <Second Behavior Example>

In the first behavior example described above, when control device 1 causes autonomous movable body 2A to transition to the remote control mode, control device 1 transmits a first control signal to autonomous movable body 2A and transmits second control signal to each of autonomous movable bodies 2B, 2C, and 2D. In the second behavior example, control device 1 transmits the same third control signal to all autonomous movable bodies 2A to 2D, unlike in the first behavior example. The third control signal includes target information for identifying an autonomous movable body that is the target of the remote control (here, autonomous movable body 2A), and control information for controlling a target to be controlled. The third control signal is one of the control signals in the present embodiment. The control information included in the third control signal is equivalent to the control information included in the first control signal in the first behavior example. Thus, each of the other autonomous movable bodies (here, autonomous movable bodies 2B, 2C, and 2D) that are not the target of the remote control can determine that the own movable body thereof is not the target of the remote control based on the target information.

The target information is, for example, an identification number that is pre-assigned to each autonomous movable body 2, a host name used in communication, an IP address, and the like.

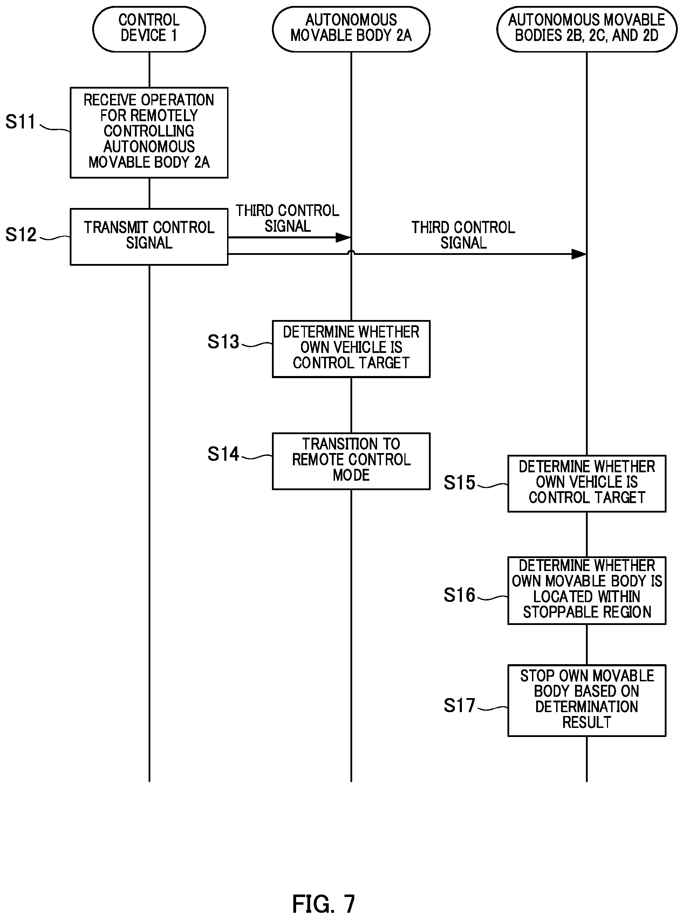

FIG. 7 is a sequence diagram for describing a second behavior example of autonomous movable body control system 100. At the start of the sequence, autonomous movable bodies 2A to 2D are each moving in the autonomous movement mode.

In step S11, control device 1 receives an operation for remotely controlling autonomous movable body 2A by a surveillant.

In step S12, control device 1 transmits a third control signal including target information indicating that the target of the remote control (hereinafter, referred to as control target) is autonomous movable body 2A, to all autonomous movable bodies 2A to 2D belonging to the group.

In step S13, autonomous movable body 2A determines whether the own movable body thereof is a control target based on the target information of the third control signal.

According to the target information, autonomous movable body 2A is the control target, and thus autonomous movable body 2A transitions to the remote control mode in Step S14.

In step S15, each of autonomous movable bodies 2B, 2C, and 2D determines whether the own movable body is a control target or not based on the target information of the third control signal.

According to the target information, autonomous movable bodies 2B, 2C, and 2D are not the control target. In this case, in step S16, each of autonomous movable bodies 2B, 2C, and 2D determines whether the own movable body (i.e., the autonomous movable body itself) is located within a stoppable region.

Then, autonomous movable bodies 2B, 2C, and 2D stop the own movable bodies thereof in step S17 based on the result of the determination in step S16. More specifically, when the own movable body is determined to be located within a stoppable region in step S16, each of autonomous movable bodies 2B, 2C, and 2D ceases further movement to stop the own movable body. When the own movable body is determined not to be located within a stoppable region in step S16, each of autonomous movable bodies 2B, 2C, and 2D continues the movement along the movement route up to that point, and stop the own movable body upon entering the stoppable region.

**In** this manner, when one autonomous movable body 2A transitions to the remote control mode, the other autonomous movable bodies 2B, 2C, and 2D in the same group promptly stop. Thus, it is possible to ensure the safety of autonomous movable bodies 2B, 2C, and 2D while remote control of autonomous movable body 2A is performed, that is, while monitoring by a surveillant is away from autonomous movable bodies 2B, 2C, and 2D.

Further, when one autonomous movable body 2A transitions to the remote control mode, and when each of the other autonomous movable bodies 2B, 2C, and 2D is not located within a stoppable region, the other autonomous movable bodies 2B, 2C, and 2D stop after moving to a stoppable region, and thus, it is possible to prevent a situation in which danger is caused by stopping the other autonomous movable bodies 2B, 2C, and 2D on the spot.

### <Variations>

While the embodiment of the present disclosure have been described above, the present disclosure is not limited to the above-described embodiment, and can be embodied in various ways without departing from the gist of the present disclosure.

In the above-described embodiment, autonomous movable body 2 (autonomous movable body 2A in FIGS. 6 and 7) as the control target was an autonomous movable body to be remotely controlled by a surveillant. In the present disclosure, the autonomous movable body to be controlled is not limited to a target of remote control, and may be a target of various other controls. As a specific example, the autonomous movable body as a control target may perform autonomous movement toward a new destination set by the surveillant after discarding the previous destination.

Further, examples of control performed on the autonomous movable body as a control target include the following. For example, an autonomous movable body as a control target may make a vocalization to a person around the autonomous movable body or may start a conversation with a person under the control of the surveillant. In this case, a person around the autonomous movable body and a surveillant may have a conversation remotely. Alternatively, artificial intelligence (AI) mounted in, for example, the autonomous movable body or a computer capable of communicating with the autonomous movable body may have a conversation with the person.

Further, for example, an autonomous movable body as the control target may be controlled by a surveillant to read instruments or meters installed at various places such as a factory in real time and to transmit the read results to the control device.

In the embodiment described above, when a surveillant determines that it is necessary to perform a remote operation when the surveillant views the environmental information of each autonomous movable body 2, or when the surveillant recognizes that control device 1 has received a request signal for remote control from autonomous movable body 2, the transition operation of autonomous movable body 2 to the remote control mode is performed by the surveillant. In the present disclosure, in addition to these examples, the transition to the remote control mode of an autonomous movable body may be triggered in the following examples.

For example, when the communication with the autonomous movable body is interrupted or when a delay equal to or longer than a predetermined time occurs, the control device may give notification prompting a surveillant to cause the autonomous movable body to transition to the remote control mode. For example, when an autonomous movable body determines that it is difficult for the own movable body to move safely, such as when the state of the sensor provided in the own movable body deteriorates (environmental information cannot be acquired due to contamination on the sensor surface, or the like) or when an abnormality occurs in the motor of the driver, the autonomous movable body may transmit a request signal to the control device.

Further, when a plurality of autonomous movable bodies monitor each other's behavior state by using sensors or the like and one of the autonomous movable bodies detects that another autonomous movable body has fallen in a state where it is difficult to move autonomously for some reason, the autonomous movable body having detected the problem may transmit a request signal to the control device requesting the control device to cause the other autonomous movable body to transition to the remote control mode. Further, when an autonomous movable body determines that a disaster (fire, earthquake, thunder, heavy rain, typhoon, or the like) has occurred, the autonomous movable body may transmit a request signal to the control device to cause the control device to remotely control the own movable body.

In the first behavior example of the embodiment described above, each of autonomous movable bodies 2 (autonomous movable bodies 2B, 2C, and 2D in FIG. 6) other than the control target makes a determination as to whether the own movable body (i.e., the autonomous movable body itself) is located within a stoppable region based on the position of the stoppable region indicated in map information when autonomous movable body 2 received the second control signal. For example, the following configuration is also possible: the position of a stoppable region is not indicated in the map information, but information indicating the position of the stoppable region is included in the second control signal.

In the above-described embodiments, each of autonomous movable bodies 2 (autonomous movable bodies 2B, 2C, and 2D in FIGS. 6 and 7) other than the control target stops the own movable body based on the result of a determination of whether the own movable body is located within a stoppable region. For example, the following configuration is also possible: an autonomous movable body other than the control target determines whether to cause the own movable body to stop based on environmental information around the own movable body instead of the determination result of whether the own movable body is located within a stoppable region. Specifically, when a crosswalk, an automobile, a traffic light, or the like is included in the camera image as the environmental information, and it is clear from the position information or the like that the position of the own movable body is on the roadway, the autonomous movable body that is not the control target may behave so as to move the own movable body to the sidewalk and then stop the own movable body, instead of stopping the own movable body on the spot.

This application is entitled to and claims the benefit of Japanese Patent Application No. 2022-116520 filed on July 21, 2022, the disclosure of which including the specification, drawings and abstract is incorporated herein by reference in its entirety.

### Industrial Applicability

The present disclosure is useful for an autonomous movable body control system that controls a plurality of autonomous movable bodies.

### Reference Signs List

100 Autonomous movable body control system
1 Control device
11 Display
12 Operation part
13 Transmitter
14 Receiver
15 Controller
2, 2A, 2B, 2C, 2D Autonomous movable body
21 Main body
22 Wheel
23 Sensor part
24 Controller
25 Driver
26 Transmitter
27 Receiver

## Claims

1. An autonomous movable body control system comprising:
a plurality of autonomous movable bodies; and
a control device that transmits a control signal for controlling at least one of the plurality of autonomous movable bodies as a control target to each of the plurality of autonomous movable bodies,
wherein, among the plurality of autonomous movable bodies, an autonomous movable body other than the control target performs determination of whether an own movable body of the autonomous movable body is located within a stoppable region, and stops based on a result of the determination.

2. The autonomous movable body control system according to claim 1, wherein
when the autonomous movable body other than the control target determines that the own movable body is located within the stoppable region, the autonomous movable body ceases further movement to stop, and when the autonomous movable body determines that the own movable body is not located within the stoppable region, the autonomous movable body stops after moving to the stoppable region.

3. The autonomous movable body control system according to claim 1, wherein
when the control device receives a predetermined operation via an operation part, the control device transmits a first control signal for controlling an autonomous movable body of the control target to the autonomous movable body of the control target, and transmits a second control signal for performing the determination to the autonomous movable body other than the control target.

4. The autonomous movable body control system according to claim 1, wherein:
when the control device receives a predetermined operation via an operation part, the control device transmits a third control signal to all of the plurality of autonomous movable bodies, the third control signal including target information for identifying an autonomous movable body of the control target and control information for controlling the autonomous movable body of the control target; and
each of the plurality of autonomous movable bodies determines whether an own movable body thereof is the autonomous movable body other than the control target, based on the third control signal.

5. An autonomous movable body that belongs to a group including a plurality of autonomous movable bodies, the autonomous movable body comprising:
a receiver that receives a control signal; and
a controller that, when the controller receives a second control signal different from a first control signal that uses at least one of the plurality of autonomous movable bodies as a control target, performs determination of whether an own movable body of the autonomous movable body is located within a stoppable region, and stops the autonomous movable body based on the determination.

6. An autonomous movable body that belongs to a group including a plurality of autonomous movable bodies, the autonomous movable body comprising:
a receiver that receives a control signal; and
a controller that, when the controller receives a third control signal that includes target information for identifying an autonomous movable body of the control target among the plurality of the autonomous movable bodies and control information for controlling the autonomous movable body of the control target, determines whether an own movable body of the autonomous movable body belonging to the group is of an autonomous movable body other than the control target, and when it is determined that the own movable body is of the autonomous movable body other than the control target, performs determination of whether the own movable body is located within a stoppable region, and stops the autonomous movable body belonging to the group based on a result of the determination.

7. A control device that transmits a control signal to each of a plurality of autonomous movable bodies that belong to a group, the control device comprising:
an operation part that receives an operation for controlling at least one of the plurality of autonomous movable bodies as a control target; and
a transmitter that, based on the operation, transmits a first control signal for controlling an autonomous movable body of the control target to the autonomous movable body of the control target, and transmits a second control signal to an autonomous movable body other than the control target, the second control signal causing the autonomous movable body other than the control target to perform a determination of whether an own movable body thereof is located within a stoppable region, and stop based on a result of the determination.

8. A control device that transmits a control signal to each of a plurality of autonomous movable bodies that belong to a group, the control device comprising:
an operation part that receives an operation for controlling at least one of the plurality of autonomous movable bodies as a control target; and
a transmitter that, based on the operation, transmits a third control signal to all of the autonomous movable bodies in the group, the third control signal including target information indicating that the at least one of the plurality of autonomous movable bodies is the control target and control information for controlling an autonomous movable body of the control target.
